# EUROPÄISCHE PATENTSCHRIFT

(11) **EP 1 364 774 B1**
(45) Veröffentlichungstag und Bekanntmachung des Hinweises auf die Patenterteilung: **08.08.2007**
(21) Anmeldenummer: 03011531.5
(22) Anmeldetag: 21.05.2003
(51) Int. Cl.: B32B 21/02, E04F 15/20, E04F 15/022

(54) **Fertigparkett mit Trittschalldämmung**
Prefabricated parquet with sound insulation
Parquet fini avec isolation acoustique

(30) Priorität: 23.05.2002 DE 20208093 U
(43) Veröffentlichungstag der Anmeldung: 26.11.2003
(73) Patentinhaber: tilo GmbH, 4923 Lohnsburg (AT)
(72) Erfinder: Schrattenecker, Franz, 4923 Lohnsburg (AT)
(74) Vertreter: Wenzel & Kalkoff

(56) Entgegenhaltungen:
- NL-C- 1 001 490
- INTERNET, [Online] XP002264669 Gefunden im Internet: <URL:http://www.pavatex.nl/nl/algemeen/alg _vraagantwoord.html> [gefunden am 2003-12-11]
- INTERNET, [Online] XP002264670 Gefunden im Internet: <URL:http://www.finnishfibreboard.com/more info.htm> [gefunden am 2003-12-11]

## Beschreibung

Die Erfindung betrifft Fertigparkett. Unter Fertigparkett ist der klassische Aufbau mit Deckschicht, quer dazu angeordneter Mittellage und ggf. Gegenzug zu verstehen. Bei vorliegender Erfindung sind ebenfalls Bodendielen aus mehreren Schichten - vorzugsweise Dreischichtdielen mit nahezu gleichen Schichten eingeschlossen. Im Nachfolgenden werden Dreischichtdielen nicht mehr gesondert erwähnt, sie sind im Begriff Fertigparkett mit eingeschlossen.

Fertigparkett wird vielfach verlegt, oft als Fußbodenbelag, der nachträglich in Wohnungen verlegt wird. Einzelne Elemente des Fertigparketts werden zu einer in der Regel schwimmend verlegten Platte zusammengefügt. Dies kann nach dem Stand der Technik sowohl mit leimlosen Verbindungsprofilen als auch mit konventioneller Nut-Feder-Verleimung geschehen. Durch das Begehen des verlegten Fertigparketts entsteht Trittschall, der sich im Gebäude unerwünscht bemerkbar macht.

Um den Trittschall so gut wie möglich zu dämpfen, werden Folien und Matten angeboten, die unter dem Parkett verlegt werden. Dadurch sollen Bodenunebenheiten des Untergrunds, auf dem das Fertigparkett verlegt wird, ausgeglichen werden und ein "Durchschlagen" des Fertigparketts auf den Untergrund beim Begehen des Fußbodenbelags vermieden werden. Diese Lösung hat sich jedoch als nachteilig erwiesen, weil der Kunde - oft der Endverbraucher - mehrere Materialien bei der Planung und Verarbeitung des Fertigparketts berücksichtigen muss.

Aus dem Bereich des Laminatfußbodens ist bekannt, dass unter dem Laminat Kunststoff-Schwerschichtmatten befestigt werden, um den Trittschall zu dämpfen. Bedingt durch die hohe Dichte des Holzwerkstoffs, aus dem Laminatfußböden hauptsächlich bestehen, genügt eine Folie unter dem Laminat in der Regel nicht, um eine ausreichende Trittschalldämmung zu bewirken. Die Kunststoff-Schwerschichtmatten weisen ein Gewicht von ca. 800 bis ca. 1.500 kg/m³ auf und haben somit den Nachteil, dass sie das Gewicht des Produkts deutlich erhöhen.

Es ist daher Aufgabe der Erfindung, ein Fertigparkett vorzuschlagen, das eine verbesserte Trittschalldämmung mit einfacher Handhabung in der Verarbeitung bietet.

Diese Aufgabe wird gelöst durch ein Fertigparkett mit einer Deckschicht aus Holz, gegebenenfalls einer ein- oder mehrlagigen Mittelschicht und einer mindestens abschnittsweise auf die Unterseite der Deckschicht oder der ggf. vorhandenen Mittelschicht aufgebrachten Unterschicht aus einem Holzwerkstoff mit einem Raumgewicht von ca. 250 bis ca. 500 kg/m3.

Es hat sich überraschenderweise herausgestellt, dass die Nachteile, die eine Kunststoff-Schwerschichtmatte - trotz Verbesserung der Trittschalldämmung - mit sich bringt, bei der Herstellung von Fertigparkett vermieden werden können. Um eine deutlich verbesserte, den durchschnittlichen Anforderungen genügende Trittschalldämmung zu erreichen, reicht es aus, eine Unterschicht aus einem Holzwerkstoff auf die Unterseite des Fertigparketts aufzubringen, die ein Raumgewicht von ca. 250 kg/m³ bis ca. 500 kg/m³ aufweist.

Ein besonders bevorzugter Holzwerkstoff ist eine Weichfaserplatte. Diese Platte ist leicht, dennoch in sich ausreichend fest, um gute Verarbeitungseigenschaften zu zeigen und es hat sich bei Versuchen herausgestellt, dass sie die gewünschte Trittschalldämmung gewährleistet.

Eine Weichfaserplatte mit einem Raumgewicht von ca. 250 kg/m³ genügt den Anforderungen an eine ausreichende Trittschalldämmung vollständig. Bevorzugt wird eine solche Platte mit einem Raumgewicht von ca. 250 kg/m³ bis ca. 500 kg/m³ eingesetzt, besonders bevorzugt von ca. 300 kg/m³ bis ca. 450 kg/m³, ganz besonders bevorzugt wird eine Faserplatte mit einem Raumgewicht von ca. 350 kg/m³.

Grundsätzlich können zwar auch andere plattenförmige Werkstoffe mit vergleichbarem Raumgewicht eingesetzt werden. Diese Produkte sind jedoch entweder keine Naturstoffe oder sie sind mit einem hohen Anteil Kunstharz oder anderen Bindemitteln versetzt. Werden solche Werkstoffe mit Fertigparkett verbunden, so sind die Möglichkeiten eines Recyclings sehr beschränkt. Heterogene Produkte sind nur schwer unter ökonomischen Gesichtspunkten aufzubereiten. Weichfaserplatten sind jedoch genau so zu verwerten wie Holz, so dass hier ein Recycling auch unter ökonomischen Gesichtspunkten sinnvoll ist.

Die Dicke der Unterschicht, die erfindungsgemäß unter dem Fertigparkett angeordnet ist, kann zwar in weiten Grenzen variieren. Es ist ohne weiteres möglich, eine Unterschicht aus einem Holzwerkstoff mit einer Dicke von weniger als 10 mm, vorzugsweise weniger als 5 mm, besonders bevorzugt von weniger als 3 mm herzustellen. Auch eine Dicke von weniger als 3 mm ist bietet wirksame Trittschalldämmung. Allerdings ist zu bedenken, dass eine zu dünne Trittschalldämmung, wenn sie auf unebenem Untergrund liegt, von diesen Unebenheiten durchdrungen wird. Damit geht die isolierende Wirkung der Unterschicht verloren.

Die Obergrenze von ca. 10 mm wird vorgeschlagen, da für Fertigparkett die Gesamtstärke ein wesentliches Verwendungskriterium ist. Fertigparkett wird üblicherweise nachträglich in Räumen verlegt, in die z. B. bereits Türen eingebaut sind. Damit diese Türen nicht gekürzt werden müssen oder das Fertigparkett zu anderen Räumen, in denen kein Parkett verlegt werden soll, nicht zu weit über das dort vorhandene Niveau hinausragt, wird sich eine Unterschicht von mehr als ca. 10 mm voraussichtlich als unwirtschaftlich erweisen. Zudem ist eine signifikante Verbesserung der Trittschallwirkung durch eine weitere Erhöhung der Dicke nicht zu erwarten.

Während die erfindungsgemäßen Vorteile bereits eintreten, wenn die Unterseite der Deckschicht oder der ggf. vorhandenen Mittelschicht nur abschnittsweise mit einer Unterschicht bedeckt sind, wird es nach einer vorteilhaften Weiterbildung der Erfindung bevorzugt, wenn die gesamte Unterseite des Fertigparketts mit der zur Verringerung des Trittschalls aufgebrachten Unterschicht bedeckt ist.

Die Unterschicht wird zweckmäßigerweise vollflächig mit der Unterseite des Fertigparketts verbunden. Besonders bevorzugt wird es, die Unterschicht mit dem Fertigparkett zu verkleben. Schon ein üblicher Weißleim, wie er in der Holzverarbeitung üblich ist, genügt. Grundsätzlich spricht nichts gegen die Verwendung von Kunstharzen, doch mit Blick auf ein späteres Recyceln bzw. Entsorgen von Fertigparkett ist ein einfacher Weißleim zu bevorzugen, denn besondere Anforderungen an Stärke oder Klebkraft der Verleimung sind nicht gegeben.

Das Fertigparkett weist eine Deckschicht auf, die auch als Nutzschicht bezeichnet wird. Es handelt sich um eine Schicht aus Massivholz. Je nach Art des Fertigparketts setzt sich die Deckschicht entweder aus einer Zahl kleinformatiger Holzlamellen zusammen, die nach einem vorgegebenen Muster zu einer geschlossenen Deckschicht gefügt sind. Alternativ kann die Deckschicht aus einer Holzlamelle bestehen; diese Ausführungsform wird auch als Landhausdiele bezeichnet.

In der Regel ist Fertigparkett mehrlagig. Die Deckschicht ist auf einer Trägerschicht, oft im rechten Winkel zur Deckschicht angeordneten Lage aus Weichholz bzw. Weichholzstäbchen, aufgebracht. Zur Vermeidung von Formänderungen z. B. durch den Übergang von einem Lagerklima in ein Raumklima ist häufig unter der Trägerschicht eine Querzugschicht angeordnet, die das Fertigparkett stabilisiert. Die Trägerschicht kann auch aus mehrschichtigen Furnierplatten oder einschichtigen Platten aus Holz und Holzwerkstoffen bestehen. Grundsätzlich ist aber auch einlagiges Fertigparkett bekannt.

Für die beste Wirkung hinsichtlich der Trittschalldämmung ist von Bedeutung, dass die Unterschicht so angeordnet ist, dass sie beim Verlegen des Fertigparketts auf dem Untergrund ruht. Die Unterschicht wirkt ausgleichend und verhindert, dass Trittschall auf den Untergrund - und damit auf das Gebäude, in dem das Fertigparkett verlegt wird - übertragen wird.

Wesentliche Merkmale der Erfindung werden nachstehend an Ausführungsbeispielen näher erläutert. Es zeigt:
- Fig. 1.: perspektivische Darstellung eines Fertigparkett-Elements mit einer Weichfaserplatte als Unterschicht;
- Fig. 2: perspektivische Darstellung eines Fertigparkett-Elements mit einer Weichfaserplatte als Unterschicht ohne Gegenzug-Schicht;
- Fig. 3: perspektivische Darstellung eines Dreischichtdielen-Elements mit einer Weichfaserplatte als Unterschicht.

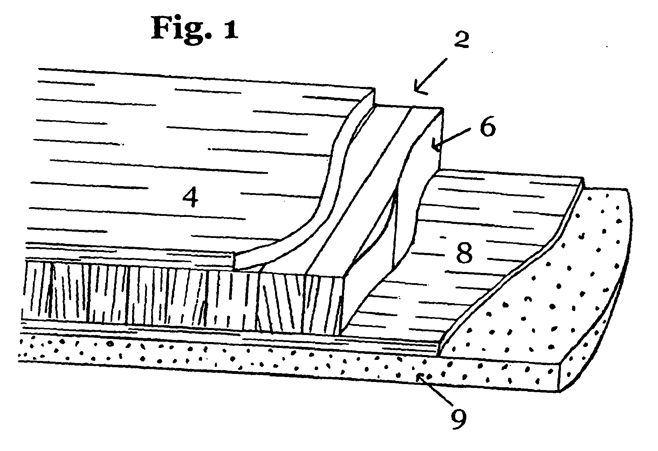

Fig. 1 zeigt ein Fertigparkett-Element 2 mit einer Deckschicht 4 aus einem ca. 2 mm starken Holzfurnier, das mit einer Lage von Nadelholz-Stäbchen 6, die zu einer ca. 8 mm starken Platte verleimt sind, verbunden ist. Die Lage 6 ist als Mittelschicht aus zwar druckfestem, aber nicht optisch hochwertigem Material. Auf der Unterseite der Lage von Nadelholz-Stäbchen 6 ist ein einfaches Furnier von ca. 2 mm Stärke als Gegenzug 8 aufgeleimt. Mit der Unterseite des Gegenzugs 8 ist eine Weichfasermatte 9 von ca. 4 mm Stärke zur Verbesserung der Trittschalldämmung verleimt. Die Weichfasermatte 9 weist ein Raumgewicht von ca. 350 kg/m³ auf.

Für die weiteren Ausführungsbeispiele werden dieselben Bezugszeichen verwendet, sofern gleiche Gegenstände bezeichnet werden.

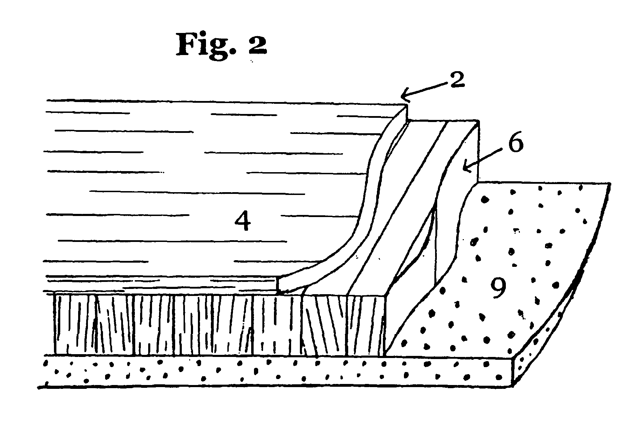

Fig. 2 zeigt einen einfacheren Aufbau eines Fertigparkett-Elements 2. Eine Deckschicht 4 aus Ahorn mit 1 mm Stärke ist auf eine Mittelschicht geleimt, die aus miteinander zu einer Platte 6 verbundenen Stäbchen aus Nadelholz besteht. Unter Verzicht auf einen Gegenzug ist eine Weichfasermatte 8 zur besseren Trittschalldämmung als Unterschicht mittels Weißleim unmittelbar auf die Unterseite der Mittelschicht geleimt. Die Weichfasermatte ist ca. 8 mm stark. Sie weist ein Raumgewicht von ca. 450 kg/m³ auf.

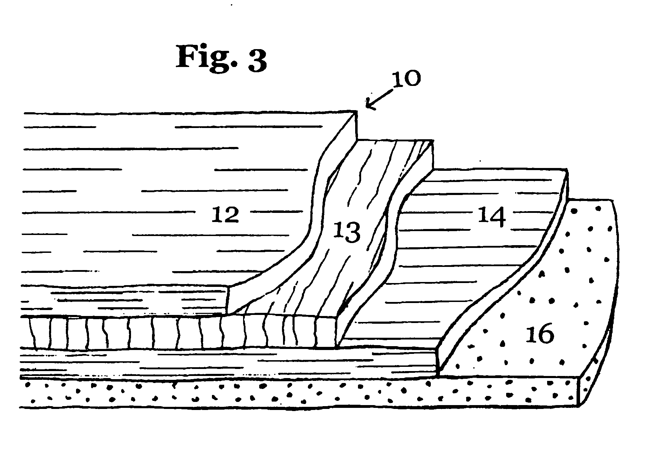

Fig. 3 zeigt ein Dreischichtdielen-Element 10, das aus drei Lagen von Massivholz-Lamellen 12, 13, 14 aufgebaut ist, die jeweils ungefähr rechtwinklig zueinander verleimt sind. Die Lagen sind jeweils ca. 2,5 mm stark. Auf die Unterseite der untersten Lage 14 des Dreischichtdielen-Elements 10 ist eine Weichfasermatte 16 als Trittschalldämmung aufgebracht. Die Matte 16 ist mit Weißleim auf der Dreischichtdiele verleimt. Sie weist eine Stärke von ca. 2,5 mm auf. Das Raumgewicht der Weichfasermatte 16 beträgt ca. 250 kg/m³.

## Patentansprüche

1. Fertigparkett mit einer Deckschicht (4) aus Holz, gegebenenfalls einer ein- oder mehrlagigen Mittelschicht (6) sowie ggf. einer Gegenzugschicht (8) und einer mindestens abschnittsweise auf die Unterseite der Deckschicht oder der ggf. vorhandenen Mittelschicht zur Trittschalldämmung aufgebrachten Unterschicht (9) aus einem Holzwerkstoff mit einem Raumgewicht von 250 bis 500 kg/m³.

2. Fertigparkett nach Anspruch 1, **dadurch gekennzeichnet, dass** die Unterschicht (9) aus einer Weichfaserplatte besteht.

3. Fertigparkett nach Anspruch 1, **dadurch gekennzeichnet, dass** die Unterschicht (9) ein Raumgewicht von 300 bis 450 kg/m³, vorzugsweise von 350 kg/m³ aufweist.

4. Fertigparkett nach Anspruch 1, **dadurch gekennzeichnet, dass** die Unterschicht (9) eine Stärke von weniger als 10 mm, vorzugsweise von weniger als 5 mm, besonders bevorzugt von weniger als 3 mm aufweist.

5. Fertigparkett nach Anspruch 1, **dadurch gekennzeichnet, dass** die Unterschicht (9) mit der Deckschicht (4) oder der ggf. vorhandenen Mittelschicht (6) oder dem Gegenzug (8) vollflächig verbunden, vorzugsweise verklebt ist.

6. Fertigparkett nach Anspruch 1, **dadurch gekennzeichnet, dass** die Unterschicht (9) die Unterseite der Deckschicht (4), der ggf. vorhandenen Mittelschicht (6) oder des Gegenzuges (8) vollständig bedeckt.

7. Fertigparkett nach Anspruch 1, **dadurch gekennzeichnet, dass** die Deckschicht (4) aus miteinander verbundenen, kleinformatigen Holzlamellen besteht.

8. Fertigparkett nach Anspruch 1, **dadurch gekennzeichnet, dass** die Deckschicht (4) aus einer einteiligen Holzlamelle besteht.

9. Fertigparkett nach Anspruch 1, **dadurch gekennzeichnet, dass** die Mittelschicht (6) einschichtig ist.

10. Fertigparkett nach Anspruch 1, **dadurch gekennzeichnet, dass** die Mittelschicht (6) mehrschichtig ist.

## Claims

1. A prefabricated parquet flooring, comprising a top layer (4) of wood, if necessary a one- or multi-layer intermediate layer (6), and if necessary a backing layer (8) and at least partially on the bottom surface of the top layer or, if present, the intermediate layer, a bottom layer (9) applied for footfall sound insulation of a wood-based material having a specific gravity of 250 to 500 kg/m³.

2. The prefabricated parquet flooring according to claim 1, **characterised in that** the bottom layer (9) is of soft board.

3. The prefabricated parquet flooring according to claim 1, **characterised in that** the bottom layer (9) has a specific gravity of 300 to 450 kg/m³, preferably of 350 kg/m³.

4. The prefabricated parquet flooring according to claim 1, **characterised in that** the bottom layer (9) has a thickness of less than 10 mm, preferably of less than 5 mm, particularly preferably of less than 3 mm.

5. The prefabricated parquet flooring according to claim 1, **characterised in that** the bottom layer (9) is bonded, preferably glued, to the top layer (4) or, if present, the intermediate layer (6), or the backing layer (8) across the entire surface thereof.

6. The prefabricated parquet flooring according to claim 1, **characterised in that** the bottom layer (9) completely covers the bottom surface of the top layer (4), of the intermediate layer (6), if present, or of the backing layer (8).

7. The prefabricated parquet flooring according to claim 1, **characterised in that** the top layer (4) comprises combined, small-size wood elements.

8. The prefabricated parquet flooring according to claim 1, **characterised in that** the top layer (4) comprises a single wood element.

9. The prefabricated parquet flooring according to claim 1, **characterised in that** the intermediate layer (6) comprises one layer.

10. The prefabricated parquet flooring according to claim 1, **characterised in that** the intermediate layer (6) comprises a plurality of layers.

## Revendications

1. Parquet fini avec une couche de recouvrement (4) en bois, éventuellement une couche centrale (6) à une ou plusieurs couches ainsi qu'éventuellement une couche à contretraction (8) et une sous-couche (9) appliquée au moins par portion sur la face inférieure de la couche de recouvrement ou de la couche centrale éventuellement présente en vue de l'isolation du bruit de chocs, constituée d'un matériau en bois avec un poids spécifique de 250 à 500 kg/m³.

2. Parquet fini selon la revendication 1, **caractérisé en ce que** la sous-couche (9) se compose d'une plaque en fibres douces.

3. Parquet fini selon la revendication 1, **caractérisé en ce que** la sous-couche (9) présente un poids spécifique de 300 à 450 kg/m³, de préférence de 350 kg/m³.

4. Parquet fini selon la revendication 1, **caractérisé en ce que** la sous-couche (9) présente une épaisseur de moins de 10 mm, de préférence de moins de 5 mm, particulièrement préférablement de moins de 3 mm.

5. Parquet fini selon la revendication 1, **caractérisé en ce que** la sous-couche (9) est reliée sur toute sa surface, de préférence collée à la couche de recouvrement (4) ou à la couche centrale (6) éventuellement présente ou à la contretraction (8).

6. Parquet fini selon la revendication 1, **caractérisé en ce que** la sous-couche (9) recouvre entièrement la face inférieure de la couche de recouvrement (4), de la couche centrale (6) éventuellement présente ou de la contretraction (8).

7. Parquet fini selon la revendication 1, **caractérisé en ce que** la couche de recouvrement (4) se compose de lamelles de bois de petit format reliées ensemble.

8. Parquet fini selon la revendication 1, **caractérisé en ce que** la couche de recouvrement (4) se compose d'une lamelle de bois en une partie.

9. Parquet fini selon la revendication 1, **caractérisé en ce que** la couche centrale (6) est à une couche.

10. Parquet fini selon la revendication 1, **caractérisé en ce que** la couche centrale (6) est à plusieurs couches.
